# EUROPEAN PATENT APPLICATION

(11) **EP 4 779 489 A1**
(43) Date of publication of application: **22.07.2026**
(21) Application number: 24869910.0
(22) Date of filing: 27.06.2024
(51) Int. Cl.: G06F 16/332, G06F 16/33, G06F 16/35, G06F 40/35, G06N 3/08, G06N 3/0455

(54) **QUESTION PROCESSING METHOD AND APPARATUS AND COMPUTING DEVICE CLUSTER**

(30) Priority: 28.09.2023 CN 202311283213
(71) Applicant: HUAWEI TECHNOLOGIES CO., LTD., Shenzhen 518129 (CN)
(72) Inventor: LI, Yinchuan, Shenzhen, Guangdong 518129 (CN); SONG, Shaoming, Shenzhen, Guangdong 518129 (CN); SHAO, Yunfeng, Shenzhen, Guangdong 518129 (CN)
(74) Representative: Körber, Martin Hans
(86) International application number: PCT/CN2024/102021
(87) International publication number: WO 2025/066351

(57) **Abstract**

A question processing method includes: obtaining a question input by a user; iteratively selecting, based on the question, an action from a plurality of actions related to prompt engineering, where in a first round of iteration, an action is selected based on the question, and in any round of iteration other than the first round of iteration, an action is selected based on the question and content obtained by performing a selected action; and when a quantity of iterations reaches a threshold or an action selected in a current round of iteration is a termination action, inputting a prompt into a large language model, to obtain an answer related to the question, where the prompt includes the question and content obtained by performing an action selected in each round of iteration. In this way, the question and the content obtained by performing the action may be continuously enhanced and optimized, so that the prompt finally input into the large language model is most easily understood by the large language model, thereby improving accuracy of an inference result of the large language model.

## Description

This application claims priority to Chinese Patent Application No. 202311283213.5, filed with the China National Intellectual Property Administration on September 28, 2023 and entitled "QUESTION PROCESSING METHOD AND APPARATUS, AND COMPUTING DEVICE CLUSTER", which is incorporated herein by reference in its entirety.

### TECHNICAL FIELD

This application relates to the field of artificial intelligence (artificial intelligence, AI) technologies, and in particular, to a question processing method and apparatus, and a computing device cluster.

### BACKGROUND

With the development of AI technologies, a large language model (large language model, LLM) has gradually entered people's life and brought many positive impact and traversals to people's life. The LLM is a language model with an extremely large-scale natural language processing capability. The LLM has a very powerful inference capability and can process and generate natural language text. The LLM typically has billions or even trillions of parameters, and therefore can handle complex natural language understanding and generation tasks. Although the LLM performs well in many natural language processing tasks, inference results of the LLM may be unsatisfactory in some cases (such as insufficient training data, semantic ambiguity, and an unclear question). Therefore, how to improve accuracy of the inference result of the LLM is an urgent technical problem that needs to be resolved currently.

### SUMMARY

This application provides a question processing method and apparatus, a computing device cluster, a computer storage medium, and a computer product, to improve accuracy of an inference result of an LLM.

According to a first aspect, this application provides a question processing method, including: obtaining a question input by a user; iteratively selecting, based on the question, an action from a plurality of actions related to prompt engineering, where in a first round of iteration, an action is selected based on the question, and in any round of iteration other than the first round of iteration, an action is selected based on the question and content obtained by performing a selected action; and when a quantity of iterations reaches a threshold or an action selected in a current round of iteration is a termination action, inputting a prompt into a large language model, to obtain an answer related to the question, where the prompt includes the question and content obtained by performing an action selected in each round of iteration. For example, prompt engineering (prompt engineering) is engineering used to develop and optimize a question to obtain a prompt (prompt). Prompt engineering can be used to improve a capability of processing a complex task scenario by a large language model, for example, question and answer and arithmetic inference capabilities. For example, the content obtained by performing the action may be used to improve understandability of the question. For example, the plurality of actions related to prompt engineering may include a termination action. The termination action may be used to terminate an iteration process.

In this way, an action is iteratively selected from the plurality of actions, and each time an action is selected, selection is performed based on the question and content obtained by performing a selected action, so that the question and the content obtained by performing the action can be continuously enhanced and optimized, and the prompt finally input into the LLM is most easily understood by the LLM, thereby improving accuracy of an inference result of the LLM.

In a possible manner, that the action is selected based on the question and the content obtained by performing the selected action includes: determining, based on the question and the content obtained by performing the selected action, a probability that an action included in the plurality of actions related to prompt engineering is selected; and using an action related to a highest probability as the selected action. In this way, a required action can be selected in any round of iteration process after the first round.

In a possible manner, that the action is selected based on the question includes: determining, based on the question, a probability that an action included in the plurality of actions related to prompt engineering is selected; and using an action related to a highest probability as the selected action. In this way, a required action can be selected in the first round of iteration.

In a possible manner, the method further includes: presenting the prompt to the user. In this way, the user can intuitively experience processing effect, so that the user can select whether to enable the function.

In a possible manner, before iteratively selecting, based on the question, the action from the plurality of actions related to prompt engineering, the method further includes: determining that a question enhancement optimization control is enabled. In this way, question enhancement optimization is performed only when the question enhancement optimization control is enabled, so that the user can perform selection autonomously.

In a possible manner, the action related to prompt engineering includes one or more of the following: introducing external knowledge, applying a template, or decomposing a question.

According to a second aspect, this application provides a question processing apparatus, including: an obtaining module and a processing module. The obtaining module is configured to obtain a question input by a user. The processing module is configured to iteratively select, based on the question, an action from a plurality of actions related to prompt engineering, where in a first round of iteration, an action is selected based on the question, and in any round of iteration other than the first round of iteration, an action is selected based on the question and content obtained by performing a selected action. The processing module is further configured to: when a quantity of iterations reaches a threshold or an action selected in a current round of iteration is a termination action, input a prompt into a large language model, to obtain an answer related to the question, where the prompt includes the question and content obtained by performing an action selected in each round of iteration.

In a possible manner, when the processing module selects the action based on the question and the content obtained by performing the selected action, the processing module is specifically configured to: determine, based on the question and the content obtained by performing the selected action, a probability that an action included in the plurality of actions related to prompt engineering is selected; and use an action related to a highest probability as the selected action.

In a possible manner, the processing module is further configured to present the prompt to the user.

In a possible manner, before the processing module iteratively selects, based on the question, the action from the plurality of actions related to prompt engineering, the processing module is further configured to determine that a question enhancement optimization control is enabled.

In a possible manner, the action related to prompt engineering includes one or more of the following: introducing external knowledge, applying a template, or decomposing a question.

According to a third aspect, this application provides a computing device cluster, including at least one computing device. Each computing device includes a processor and a memory, and the processor of the at least one computing device is configured to execute instructions stored in the memory of the at least one computing device, so that the computing device cluster performs the method according to the first aspect or any one of the possible implementations of the first aspect.

According to a fourth aspect, this application provides a computer-readable storage medium, including computer program instructions. When the computer program instructions are executed by a computing device, the computing device performs the method according to the first aspect or any one of the possible implementations of the first aspect; or when the computer program instructions are executed by a computing device cluster, the computing device cluster performs the method according to the first aspect or any one of the possible implementations of the first aspect. For example, the computing device cluster may include one or more computing devices.

According to a fifth aspect, this application provides a computer program product including instructions. When the instructions are run by a computing device, the computing device is enabled to perform the method according to the first aspect or any one of the possible implementations of the first aspect; or when the instructions are run by a computing device cluster, the computing device cluster is enabled to perform the method according to the first aspect or any one of the possible implementations of the first aspect. For example, the computing device cluster may include one or more computing devices.

It may be understood that, for beneficial effect of the second aspect to the fifth aspect, refer to the related description in the first aspect. Details are not described herein again.

### BRIEF DESCRIPTION OF DRAWINGS

The following briefly describes accompanying drawings that need to be used in descriptions of embodiments or the current technology.
FIG. 1 is a diagram of an architecture of an LLM-based question and answer system according to an embodiment of this application;
FIG. 2A and FIG. 2B are a diagram of an operating process of a question enhancement component shown in FIG. 1;
FIG. 3(A) and FIG. 3(B) are a diagram of deployment of components in the LLM-based question and answer system shown in FIG. 1;
FIG. 4(A) and FIG. 4(B) are a diagram of an interface of an electronic device according to an embodiment of this application;
FIG. 5 is a diagram of a training process of a question enhancement component shown in FIG. 1;
FIG. 6 is a schematic flowchart of a question processing method according to an embodiment of this application;
FIG. 7 is a diagram of a structure of a question processing apparatus according to an embodiment of this application;
FIG. 8 is a diagram of a structure of a computing device according to an embodiment of this application;
FIG. 9 is a diagram of a structure of a computing device cluster according to an embodiment of this application; and
FIG. 10 is a diagram of a structure of another computing device cluster according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the term like "example" or "for example" is intended to present a relative concept in a specific manner.

In descriptions of embodiments of this application, unless otherwise specified, "a plurality of" means two or more. For example, a plurality of processing units mean two or more processing units, and a plurality of elements mean two or more elements.

Generally, to better obtain an effective inference result, a series of processing may be performed on a question input into an LLM. The processing actions include but are not limited to the following.
(1) Introduce external knowledge (through searching and using a knowledge base): A searching engine, a vector knowledge base, or the like is used to retrieve professional knowledge related to a question, and a prompt (prompt) is formed by combining the professional knowledge and the question and is input into an LLM to obtain an answer (that is, an inference result). Since the data input into the LLM includes the professional knowledge related to the question, this manner can improve reliability of domain-specific knowledge in the answer.
(2) Decompose the question: For an excessive long and complex question, the LLM cannot directly process the question that requires a strong inference capability. Therefore, the question can be properly decomposed, and the complex question is decomposed into a series of simple question combinations, which are gradually resolved by the LLM.
(3) Apply a new template to control an answer manner: For some questions, features of the LLM may be used to embed the questions into specific templates, outputs of the LLM are required to meet specific requirements.

The foregoing actions are actions related to prompt engineering, which is one of the best methods for resolving the question and obtaining an effective answer by using the LLM. However, during use, only one specific processing method can be used and the method completely depends on manual setting. As a result, the LLM can obtain an effective inference result only when a specific type of question occurs. For example, prompt engineering is engineering used to develop and optimize a question to obtain a prompt (prompt). Prompt engineering can be used to improve a capability of processing a complex task scenario by a large language model, for example, question and answer and arithmetic inference capabilities.

In view of this, an embodiment of this application provides a question processing method. In the method, an action is iteratively selected from a plurality of actions, and each time an action is selected, selection is performed based on a question and content obtained by performing a selected action. When a quantity of iterations reaches a threshold or a selected action is a termination action, a prompt that includes the question and all content obtained by performing selected actions can be input into an LLM for processing. In this way, the question is more easily understood and processed by the LLM by continuously enhancing and optimizing the question. Therefore, a better answer can be obtained by processing the enhanced and optimized question by using the LLM subsequently.

The following first describes an application scenario of the question processing method provided in this embodiment of this application. The question processing method may be applied to an LLM-based question and answer scenario.

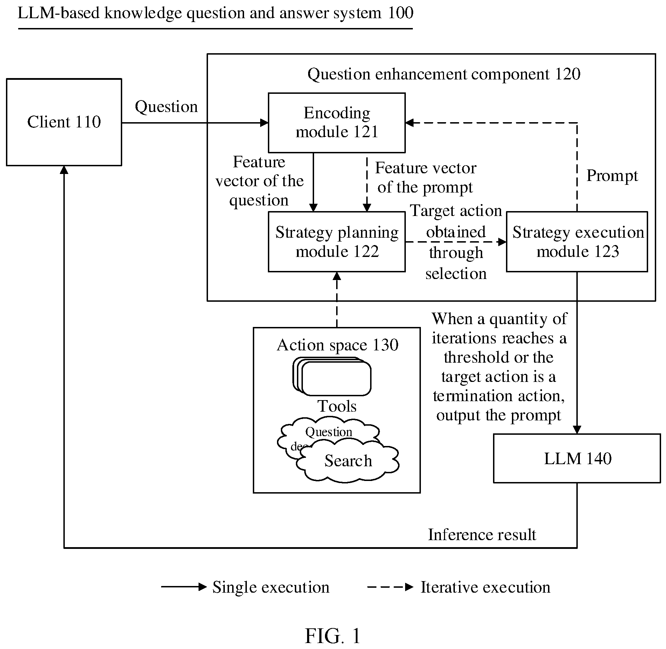

For example, FIG. 1 is a diagram of an architecture of an LLM-based question and answer system according to an embodiment of this application. As shown in FIG. 1, the LLM-based question and answer system 100 may include a client 110, a question enhancement component 120, an action space 130, and an LLM 140.

The client 110 is mainly responsible for receiving a question (question or query) input by a user, transmitting the question to the question enhancement component 120, receiving an inference result (that is, an answer (answer)) from the LLM 140, and presenting the inference result to the user. The client 110 may be a desktop application, a mobile application, a web application, a web-based application, or the like. In this embodiment, the user may input the question on the client 110. After the user completes inputting and triggers an information search task on the client 110, the client 110 may transmit the question input by the user to the question enhancement component 120. For example, after completing inputting, the user may tap, on the client 110, a button for executing the information search task. For example, when the client 110 is the web application, the user may tap an "enter" button on a keyboard, to trigger the information search task.

The question enhancement component 120 is mainly configured to perform enhancement optimization on the question obtained from the client 110 by using an action stored in the action space 130 to obtain a prompt (prompt). The prompt includes the question and content that is used to improve understandability of the question. The content that is used to improve understandability of the question may be understood as content that can help the LLM 140 better understand the question. In addition, the question enhancement component 120 may also transmit the obtained prompt to the LLM 140, so that the LLM 140 processes the prompt to obtain the inference result. The question enhancement component 120 is described in detail below.

The action space 130 is mainly configured to store various pre-constructed actions related to prompt engineering, for example, introducing external knowledge (through searching and using a knowledge base), decomposing a question, or applying a new template to control an answer manner, to obtain content used to improve understandability of the question. For example, the action in the action space 130 may be understood as an operation performed on the question or the prompt. In addition, the action related to prompt engineering may also include a termination action. The termination action may be used to terminate a process of selecting the action.

The LLM 140 is mainly configured to process the prompt output by the question enhancement component 120, to obtain the inference result related to the question input by the user.

In this embodiment, the question enhancement component 120 may include: an encoding module 121, a strategy planning module 122, and a strategy execution module 123. The encoding module 121 may be configured to encode the question to obtain a feature vector of the question. In addition, the encoding module 121 may also be configured to encode a prompt obtained by executing a target action by the strategy execution module 123, to obtain a feature vector of the prompt. For example, the encoding module 121 may be, but is not limited to, a BERT (bidirectional encoder representation from transformers).

The strategy planning module 122 is mainly configured to process the feature vector output by the encoding module 121, to select one target action from the action space 130. For example, after processing the feature vector, the strategy planning module 122 may obtain a probability that each action in the action space 130 is selected, and use one action related to a highest probability as the target action. In some embodiments, the strategy planning module 122 may be, but is not limited to, a neural network (neural network, NN) classifier, for example, a multilayer perceptron (multilayer perceptron, MLP).

The strategy execution module 123 is mainly configured to execute the target action selected by a strategy planning model 122, to obtain a prompt. When the target action is not the termination action, the strategy execution module 123 may execute the target action to obtain content used to prompt understandability of the question, and splice, combine, or the like the content and the question to generate a new prompt. Then, the strategy execution module 123 may transmit the latest prompt generated by the strategy execution module 123 to the encoding module 121. Then, the encoding module 121 may encode the prompt generated by the strategy execution module 123, and transmit a feature vector that is of the prompt and that is obtained through encoding to the strategy planning module 122. Then, the strategy planning module 122 may process the feature vector of the prompt, to select one target action from the action space 130 again, and transmit the target action to the strategy execution module 123. However, when the target action is the termination action, the strategy execution module 123 may input, into the LLM 140, a prompt obtained by executing the target action last time by the strategy execution module 123. In addition, when a quantity of times of selecting actions by the strategy planning module 122 reaches a preset time quantity threshold, the strategy execution module 123 may also transmit, to the LLM 140, the generated prompt obtained by executing the target action by the strategy execution module 123. In some embodiments, the strategy execution module 123 may be, but is not limited to, an NN. It should be understood that, the prompt transmitted by the strategy execution module 123 to the LLM 140 includes the question input by the user and content that is used to improve understandability of the question and that is obtained by executing each action by the strategy execution module 123. For example, after executing two actions, the strategy execution module 123 transmits the latest generated prompt to the LLM 140. Content obtained by executing a first action to improve understandability of the question is knowledge1, and content obtained by executing a second action to improve understandability of the question is knowledge2. In this way, the prompt transmitted to the LLM 140 is [knowledge1+knowledge2+question].

Therefore, the question enhancement component 120 may implement enhancement optimization on the question input by the user for a plurality of times, so that the prompt input into the LLM 140 is most easily understood by the LLM. In this way, a matching degree between the inference result of the LLM 140 and the question can be ensured, and accuracy of the inference result is improved.

For ease of understanding, the following describes in detail an operating process of the question enhancement component 120.

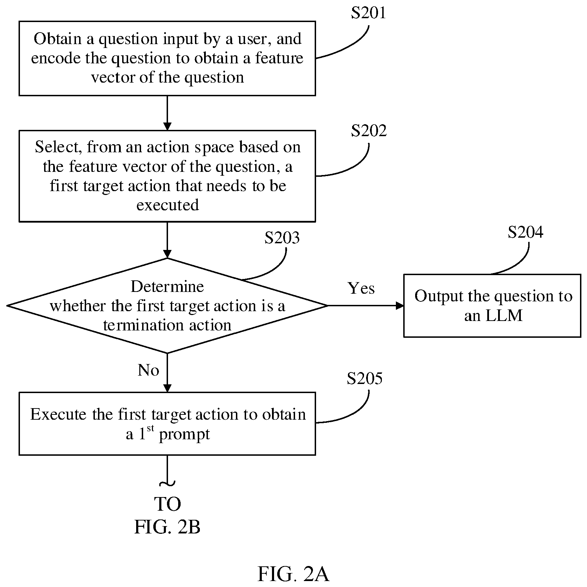

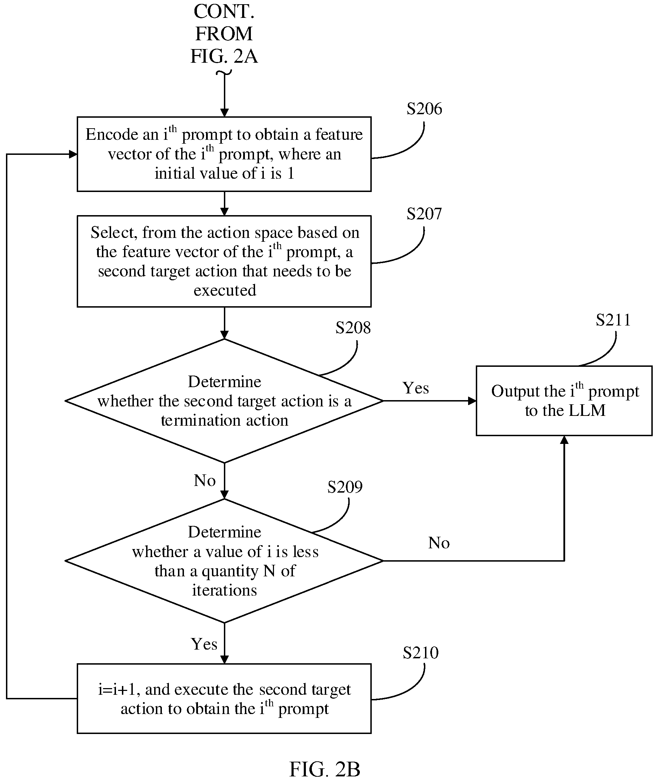

For example, FIG. 2A and FIG. 2B are a diagram of an operating process of the question enhancement component shown in FIG. 1. As shown in FIG. 2A and FIG. 2B, the operating process of the question enhancement component 120 may include the following steps.

S201: Obtain a question input by a user, and encode the question to obtain a feature vector of the question.

In this embodiment, after the user completes inputting of the question on an electronic device, for example, a mobile phone or a computer, and confirms to query an answer related to the question, the question enhancement component 120 may obtain the question input by the user. Then, the question enhancement component 120 may encode the question by using the encoding module 121 in the question enhancement component 120, to obtain a feature vector of the question.

S202: Select, from the action space based on the feature vector of the question, a first target action that needs to be executed.

In this embodiment, the question enhancement component 120 may input the feature vector of the question into the strategy planning module 122 in the question enhancement component 120, to obtain a probability that each action in the action space 130 can be selected. Then, the question enhancement component 120 may use an action related to a highest probability as the first target action.

S203: Determine whether the first target action is a termination action.

In this embodiment, when the first target action is the termination action, it indicates that the LLM can well understand the question without performing enhancement optimization on the question. Therefore, the question may be directly output to the LLM, that is, S204 is performed. When the first target action is not the termination action, it indicates that the LLM can well understand the question only when enhancement optimization needs to be performed on the question. Therefore, the first target action may be performed, that is, S205 is performed.

S204: Output the question to the LLM.

In this embodiment, when the first target action is the termination action, the question enhancement component 120 may input the question into the LLM 140.

S205: Execute the first target action to obtain a 1^{st} prompt.

In this embodiment, when the first target action is not the termination action, the question enhancement component 120 may execute the first target action by using the strategy execution module 123 in the question enhancement component 120, to obtain content that can improve understandability of the question and that is related to the first target action; and combine the content and the question to obtain the 1^{st} prompt. The 1^{st} prompt includes the question and the content obtained by executing the first target action. For example, when the first target action is decomposing the question, executing the first target action may be decomposing the question, to obtain a series of simple question combinations. The simple question combinations and the original question form a prompt. When the first target action is retrieving professional knowledge related to the question by using a searching engine, executing the first target action may be retrieving the professional knowledge related to the question by using the searching engine, and splicing the retrieved data and the question to obtain a prompt. When the first target action is applying a new template to control an answer manner, executing the first target action may be embedding the question into a specific template to obtain a prompt.

S206: Encode an i^{th} prompt to obtain a feature vector of the i^{th} prompt, where an initial value of i is 1.

In this embodiment, after the i^{th} prompt is obtained, the question enhancement component 120 may encode the i^{th} prompt to obtain the feature vector of the i^{th} prompt. The initial value of i is 1.

S207: Select, from the action space based on the feature vector of the i^{th} prompt, a second target action that needs to be executed.

In this embodiment, the question enhancement component 120 may input the feature vector of the i^{th} prompt into the strategy planning module 122 in the question enhancement component 120, to obtain a probability that each action in the action space 130 can be selected. Then, the question enhancement component 120 may use an action related to a highest probability as the second target action.

S208: Determine whether the second target action is a termination action.

In this embodiment, when the second target action is the termination action, it indicates that the i^{th} prompt can be well understood by the LLM. Therefore, the i^{th} prompt may be directly output to the LLM, that is, S211 is performed. When the second target action is not the termination action, a value of i and a preset quantity N of iterations may be determined, to determine whether the preset quantity of iterations is reached, that is, S209 is performed.

S209: Determine whether the value of i is less than the quantity N of iterations.

In this embodiment, when the value of i is less than the quantity N of iterations, it indicates that optimization may continue to be performed on the i^{th} prompt. Therefore, the second target action may be performed, that is, S210 is performed. When the value of i is equal to the quantity N of iterations, it indicates that a maximum quantity of iterations is reached. In this case, optimization on the i^{th} prompt may be terminated, and the i^{th} prompt is output to the LLM, that is, S211 is performed.

S210: i=i+1, and execute the second target action to obtain the i^{th} prompt.

In this embodiment, when the value of i is less than the quantity N of iterations, i may be updated to i+1, and the second target action is executed, to obtain content that can improve understandability of the question and that is related to the second target action. Then, the latest obtained content may be added to a prompt obtained last time, to obtain a new prompt, and 206 is returned to be executed.

S211: Output the i^{th} prompt to the LLM.

In this embodiment, when the second target action is the termination action or the value of i is equal to the quantity N of iterations, the question enhancement component 120 may input the i^{th} prompt into the LLM 140.

Therefore, the question enhancement component 120 may perform enhancement optimization on the question input by the user, so that the LLM 140 can better understand the question input by the user, thereby improving accuracy of an inference result of the LLM 140.

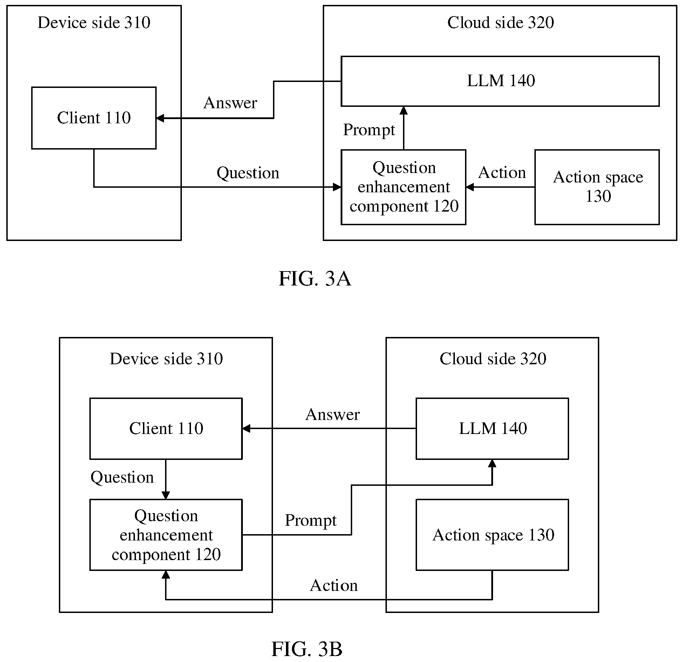

It should be noted that both the client 110 and the question enhancement component 120 shown in FIG. 1 may be configured on the electronic device, for example, the mobile phone and the computer. In addition, the question enhancement component 120 may also be configured on a server (for example, a cloud server). Both the action space 130 and the LLM 140 may be, but are not limited to, configured on a server (for example, a cloud server), and the action space 130 and the LLM 140 may be configured on a same server, or may be configured on different servers. For example, as shown in FIG. 3(A), the client 110 is configured at a device side 310, and the question enhancement component 120, the action space 130, and the LLM 140 are all configured at a cloud side 320. As shown in FIG. 3(B), both the client 110 and the question enhancement component 120 are configured at a device side 310, and both the action space 130 and the LLM 140 are configured at a cloud side 320. The device side 310 may be understood as a side of the electronic device used by the user, and the cloud side 320 may be understood as a side of the server.

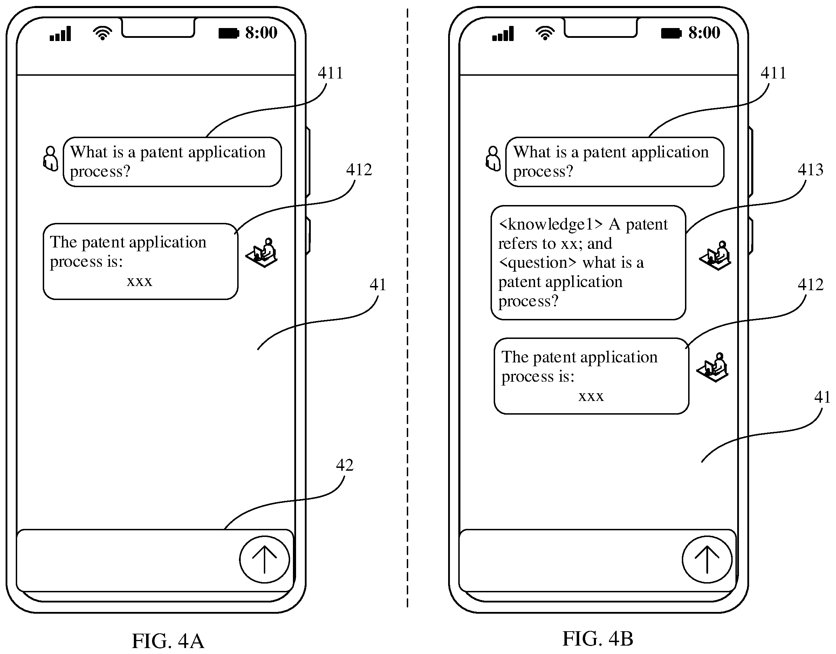

In this embodiment, a session window may be displayed on the client 110 shown in FIG. 1 or FIG. 3(A) and FIG. 3(B). The user may input a question into the session window. In addition, the client 110 may display, in the session window, an inference result that is related to the question and that is output by the LLM 140. For example, as shown in FIG. 4(A), FIG. 4(A) shows a session window 41. The session window 41 may display a question 411 input by the user and an inference result 412 of the LLM. The session window 41 may include an input control 42, and the user may input the question by using the input control 42. In addition, to help the user learn of effect of enhancing and optimizing the question by the question enhancement component 120, the client 110 may further present, to the user, a prompt input by the question enhancement component 120 into the LLM 140. For example, in FIG. 4(B), in addition to the question 411 input by the user and the inference result 412, a prompt 413 input into the LLM 140 is further displayed in the session window 41. The prompt 413 may include content "knowledge1" used to improve understandability of the question and the question "question" input by the user. In this way, the user may intuitively observe the effect of enhancing and optimizing the question by the question enhancement component 120, and may further select whether to enable the question enhancement component 120 based on a requirement of the user. In some embodiments, a control for enabling or disabling the question enhancement component 120 may be, but is not limited to, configured on the device side configured with the client 110. In this way, the user may select, based on the requirement of the user, whether to enable the question enhancement component 120.

The foregoing is the related description of the LLM-based question and answer system provided in this embodiment of this application. Before the LLM-based question and answer system is used, the question enhancement component in the system may be first trained. The following describes a process of training the question enhancement component.

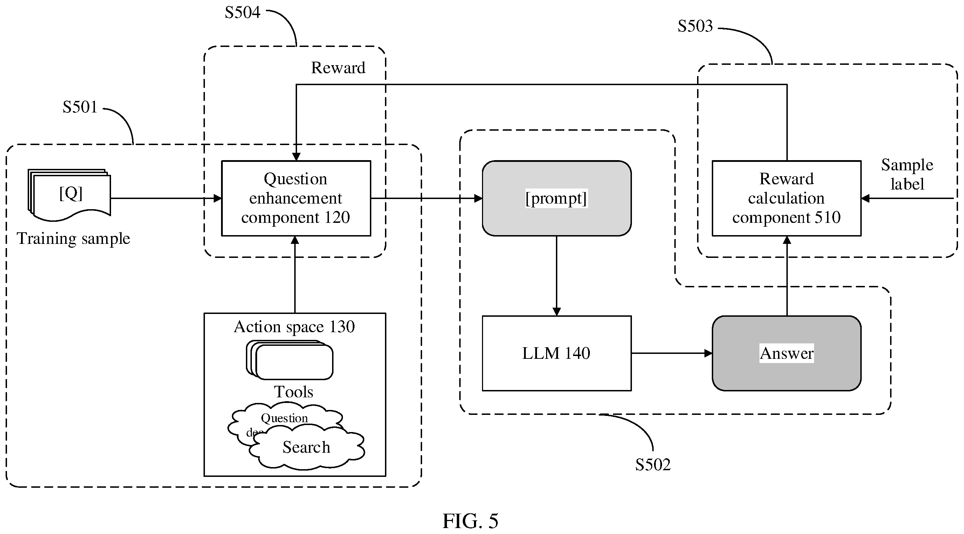

For example, FIG. 5 is a diagram of a training process of the question enhancement component in FIG. 1. As shown in FIG. 5, the training process may include the following steps.

S501: Process a training sample by using the question enhancement component 120, to obtain a prompt.

In this embodiment, the training sample may be constructed in advance. The training sample may include a question. Then, the training sample may be input into the question enhancement component 120, so as to process the training sample by using the question enhancement component 120 to obtain the prompt.

When processing the training sample, the question enhancement component 120 may randomly sample an action from the action space 130, and perform the action obtained through random sampling. When the action obtained through random sampling is a termination action or a preset quantity of iterations is reached, a latest obtained prompt may be output. For a processing procedure of S501, refer to the description in FIG. 2A and FIG. 2B. In addition, a greatest difference between the processing procedures in S501 and FIG. 2A and FIG. 2B is that: In FIG. 2A and FIG. 2B, after the probability that each action is selected is obtained, the action related to the highest probability is used as the target action, while in S501, after a probability that each action is selected is obtained, one action is randomly selected as a target action based on the probability.

S502: Process the prompt by using the LLM 140 to obtain an answer (answer).

In this embodiment, after the prompt is obtained, the prompt may be processed by using the LLM 140 to obtain the answer, that is, obtain an inference result.

S503: Process the answer and a sample label (that is, a standard answer) of the training sample by using a reward calculation component 510, to obtain a reward (reward).

In this embodiment, after the answer is obtained, the reward calculation component 510 may process the answer and the standard answer to obtain the reward. For example, a bilingual translation quality evaluation assistant tool (bilingual evaluation understudy, BLEU) may be used to evaluate similarity between the answer and the standard answer, to obtain the reward. Alternatively, feature vectors of the answer and the standard answer are first calculated through an NN, and then the feature vectors of the answer and the standard answer are calculated according to a cosine similarity algorithm, to obtain the reward. Higher similarity between the answer and the standard answer indicates a higher reward.

In some embodiments, in addition to being calculated by using the reward calculation component 510, the reward may also be manually determined. In this case, S503 may be changed to: presenting the answer to a user, and generating a reward based on a received result of determining the answer and a standard answer by the user.

S504: Train the question enhancement component 110 to maximize the reward.

In this embodiment, after the reward is obtained, a parameter in the question enhancement component 110 may be adjusted to maximize the reward, to train the question enhancement component 110.

In this way, training on the question enhancement component 110 is achieved.

The foregoing is the related description of the LLM-based question and answer system provided in this embodiment of this application. The following describes, based on the foregoing content, a question processing method provided in embodiments of this application.

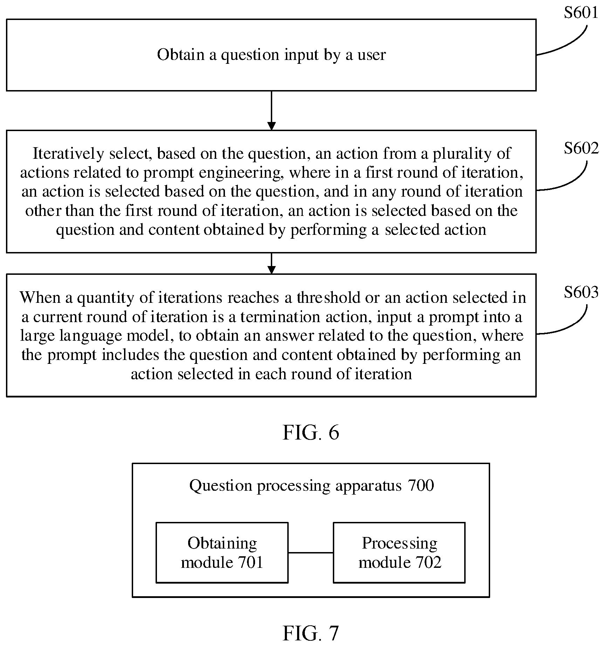

For example, FIG. 6 is a schematic flowchart of a question processing method according to an embodiment of this application. It may be understood that the method may be performed by any apparatus, device, platform, or device cluster having computing and processing capabilities. As shown in FIG. 6, the question processing method may include the following steps.

S601: Obtain a question input by a user.

S602: Iteratively select, based on the question, an action from a plurality of actions related to prompt engineering, where in a first round of iteration, an action is selected based on the question, and in any round of iteration other than the first round of iteration, an action is selected based on the question and content obtained by performing a selected action.

In this embodiment, after the question input by the user is obtained, the action may be iteratively selected, based on the question, from the plurality of actions related to prompt engineering. In the first round of iteration, the action is selected based on the question, and in any round of iteration other than the first round of iteration, the action is selected based on the question and the content obtained by performing the selected action. For example, the obtained content may be used to improve understandability of the question. In some embodiments, after the first round of iteration, in a current round of iteration, the question and the content obtained by performing the selected action may be first combined, spliced, or the like. Then, a result obtained through combination or splicing is encoded, to obtain a feature vector that can represent the result. Then, a probability that each action included in the plurality of actions related to prompt engineering is selected may be determined by using the feature vector. Finally, an action related to a highest probability may be used as an action selected in the current round of iteration. In this way, a required action is selected. In the first round of iteration, the question may be first encoded, to obtain a feature vector that can represent the question. Then, a probability that each action included in the plurality of actions related to prompt engineering is selected may be determined by using the feature vector. Finally, an action related to a highest probability may be used as an action selected in the first round of iteration. In this way, a required action is selected. For example, the plurality of actions related to prompt engineering may include a termination action. The termination action may be used to terminate an iteration process.

S603: When a quantity of iterations reaches a threshold or the action selected in the current round of iteration is the termination action, input a prompt into a large language model, to obtain an answer related to the question, where the prompt includes the question and content obtained by performing an action selected in each round of iteration.

In this embodiment, when the quantity of iterations reaches the threshold or the action selected in the current round of iteration is the termination action, the prompt may be input into the large language model, to obtain the answer related to the question. The prompt includes the question and the content obtained by performing the action selected in each round of iteration. In some embodiments, the prompt may be presented to the user, so that the user learns of processing effect. For example, the prompt may be displayed in a manner shown in FIG. 4(B).

In this way, an action is iteratively selected from the plurality of actions, and each time an action is selected, selection is performed based on the question and content obtained by performing a selected action, so that the question and the content obtained by performing the action can be continuously enhanced and optimized, and the prompt finally input into the LLM is most easily understood by the LLM, thereby improving accuracy of an inference result of the LLM.

In some embodiments, before S602, whether a question enhancement optimization control is enabled may be first determined. When the question enhancement optimization control is enabled, S602 is performed. For example, the question enhancement optimization control may be the question enhancement component 120 shown in FIG. 1.

It may be understood that, for an execution process of the steps shown in FIG. 6, refer to, but not limited to, the related description in FIG. 2A and FIG. 2B. In addition, sequence numbers of the steps do not mean an execution sequence in the foregoing embodiments. The execution sequence of the processes should be determined based on functions and internal logic of the processes, and should not constitute any limitation on the implementation processes of embodiments of this application. In addition, the described embodiments may be combined based on an actual situation, and a combined solution still falls within the protection scope of this application.

Based on the method in the foregoing embodiment, an embodiment of this application provides a question processing apparatus.

For example, FIG. 7 is a diagram of a structure of a question processing apparatus according to an embodiment of this application. As shown in FIG. 7, the question processing apparatus includes an obtaining module 701 and a processing module 702. The obtaining module 701 is configured to obtain a question input by a user. The processing module 702 is configured to iteratively select, based on the question, an action from a plurality of actions related to prompt engineering, where in a first round of iteration, an action is selected based on the question, and in any round of iteration other than the first round of iteration, an action is selected based on the question and content obtained by performing a selected action. The processing module 702 is further configured to: when a quantity of iterations reaches a threshold or an action selected in a current round of iteration is a termination action, input a prompt into a large language model, to obtain an answer related to the question, where the prompt includes the question and content obtained by performing an action selected in each round of iteration.

In some embodiments, when the processing module 702 performs selection on the plurality of actions based on the question and the content obtained by performing the selected action, the processing module 702 is specifically configured to: determine, based on the question and the content obtained by performing the selected action, a probability that an action included in the plurality of actions related to prompt engineering is selected; and use an action related to a highest probability as the selected action.

In some embodiments, the processing module 702 is further configured to present the prompt to the user.

In some embodiments, before the processing module 702 iteratively selects, based on the question, the action from the plurality of actions related to prompt engineering, the processing module 702 is further configured to determine that a question enhancement optimization control is enabled.

In some embodiments, the action related to prompt engineering includes one or more of the following: introducing external knowledge, applying a template, or decomposing a question.

In some embodiments, both the obtaining module 701 and the processing module 702 shown in FIG. 7 may be implemented by using software, or may be implemented by using hardware. For example, the following uses the obtaining module 701 as an example to describe an implementation of the obtaining module 701. Similarly, for an implementation of the processing module 702, refer to the implementation of the obtaining module 701.

A module is used as an example of a software functional unit, and the obtaining module 701 may include code run on a computing instance. The computing instance may include at least one of a physical host (computing device), a virtual machine, and a container. Further, there may be one or more computing instances. For example, the obtaining module 701 may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

A module is used as an example of a hardware functional unit, and the obtaining module 701 may include at least one computing device, for example, a server. Alternatively, the obtaining module 701 may be a device implemented using an application-specific integrated circuit (application-specific integrated circuit, ASIC) or a programmable logic device (programmable logic device, PLD) or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of computing devices included in the obtaining module 701 may be distributed in a same region, or may be distributed in different regions. The plurality of computing devices included in the obtaining module 701 may be distributed in a same AZ, or may be distributed in different AZs. Similarly, the plurality of computing devices included in the obtaining module 701 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the obtaining module 701 may be configured to perform any step in the question processing method described in the foregoing embodiment, and the processing module 702 may also be configured to perform any step in the question processing method described in the foregoing embodiment. In addition, the obtaining module 701 may also be combined with the processing module 702, to be responsible for performing any step in the question processing method described in the foregoing embodiment. In addition, steps implemented by the obtaining module 701 and the processing module 702 may also be specified as required. The obtaining module 701 and the processing module 702 respectively implement different steps in the question processing method described in the foregoing embodiment, to implement all functions of the question processing apparatus 700 shown in FIG. 7.

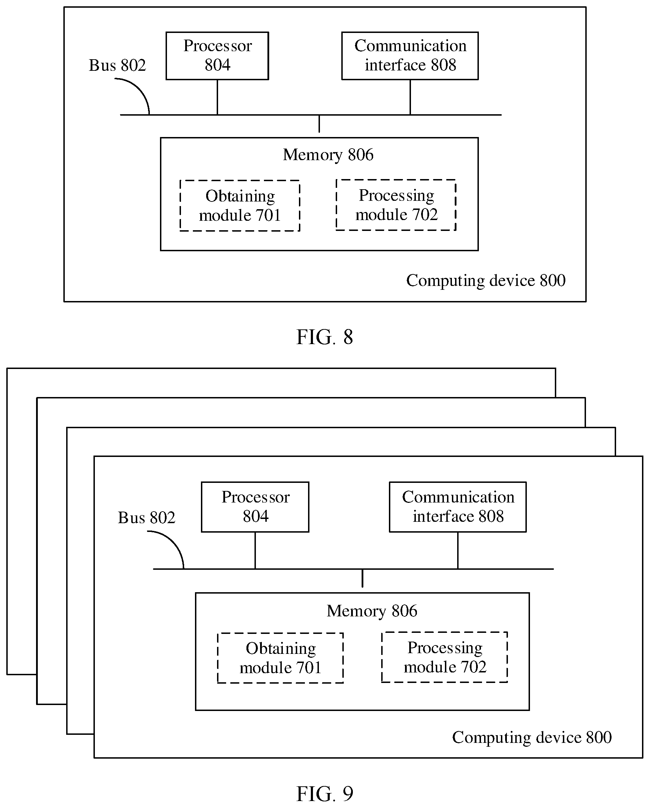

This application further provides a computing device 800. As shown in FIG. 8, the computing device 800 includes a bus 802, a processor 804, a memory 806, and a communication interface 808. The processor 804, the memory 806, and the communication interface 808 communicate with each other through the bus 802. The computing device 800 may be a server or a terminal device. It should be understood that a quantity of processors and a quantity of memories in the computing device 800 are not limited in this application.

The bus 802 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 8, but this does not indicate that there is only one bus or only one type of bus. The bus 804 may include a channel through which various components (for example, the memory 806, the processor 804, and the communication interface 808) of the computing device 800 transmit information to each other.

The processor 804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 806 may include a volatile memory (volatile memory), such as a random access memory (random access memory, RAM). The processor 804 may further include a non-volatile memory (non-volatile memory), such as a read-only memory (read-only memory, ROM), a flash memory, a hard disk drive (hard disk drive, HDD), or a solid state drive (solid state drive, SSD).

The memory 806 stores executable program code, and the processor 804 executes the executable program code to separately implement a function of the obtaining module 701 and a function of the processing module 702 shown in FIG. 7, so as to implement the question processing method described in the foregoing embodiment. That is, the memory 806 stores instructions used to perform the question processing method described in the foregoing embodiment.

Alternatively, the memory 806 stores executable code, and the processor 804 executes the executable code to separately implement a function of the question processing apparatus 700 shown in FIG. 7, so as to implement the question processing method described in the foregoing embodiment. That is, the memory 806 stores instructions used to perform the question processing method described in the foregoing embodiment.

The communication interface 803 uses a transceiver module, for example, but not limited to, a network interface card or a transceiver, to implement communication between the computing device 800 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a mobile phone.

As shown in FIG. 9, the computing device cluster includes at least one computing device 800. A memory 806 in the one or more computing devices 800 in the computing device cluster may store same instructions used to perform the question processing method described in the foregoing embodiment.

In some possible implementations, the memory 806 in the one or more computing devices 800 in the computing device cluster may also separately store a part of instructions used to perform the question processing method described in the foregoing embodiment. In other words, a combination of the one or more computing devices 800 may jointly execute instructions used to perform the question processing method described in the foregoing embodiment.

It should be noted that memories 806 in different computing devices 800 in the computing device cluster may store different instructions, and the different instructions are separately used to perform a part of functions of the question processing apparatus 700 shown in the FIG. 7. In other words, the instructions stored in the memories 806 in the different computing devices 800 may implement functions of one or more of the obtaining module 701 and the processing module 702.

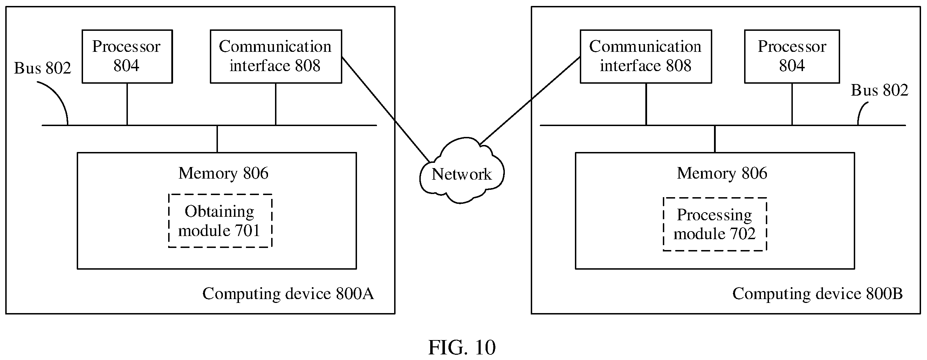

In some possible implementations, the one or more computing devices in the computing device cluster may be connected through a network. The network may be a wide area network, a local area network, or the like. FIG. 10 shows a possible implementation. As shown in FIG. 10, two computing devices 800A and 800B are connected through a network. Specifically, each computing device is connected to the network through a communication interface in the computing device. In this possible implementation, a memory 806 in the computing device 800A stores instructions for performing a function of the obtaining module 701. In addition, a memory 806 in the computing device 800B stores instructions for performing a function of the processing module 702.

It should be understood that a function of the computing device 800A shown in FIG. 10 may also be completed by a plurality of computing devices 800. Similarly, a function of the computing device 800B may also be completed by a plurality of computing devices 800.

An embodiment of this application further provides another computing device cluster. For a connection relationship between computing devices in the computing device cluster, refer to the connection manner in the computing device cluster in FIG. 9 and FIG. 10 similarly. A difference lies in that a memory 806 in one or more computing devices 800 in the computing device cluster may store same instructions used to perform the method in the foregoing embodiment.

In some possible implementations, the memory 806 in the one or more computing devices 800 in the computing device cluster may also separately store a part of instructions used to perform the question processing method. In other words, a combination of the one or more computing devices 800 may jointly execute instructions used to perform the question processing method.

Based on the method in the foregoing embodiment, an embodiment of this application provides a computer-readable storage medium. The computer-readable storage medium stores a computer program, and when the computer program is run on an electronic device, the electronic device is enabled to perform the method described in the foregoing embodiment. For example, the computer-readable storage medium may be any usable medium that can be stored by the computing device, or a data storage device, for example, a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

Based on the method in the foregoing embodiment, an embodiment of this application provides a computer program product including instructions. When the computer program product runs on an electronic device, the electronic device is enabled to perform the method in the foregoing embodiment.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to a part of technical features thereof, without departing from the protection scope of the technical solutions of embodiments of this application.

## Claims

1. A question processing method, wherein the method comprises:
obtaining a question input by a user;
iteratively selecting, based on the question, an action from a plurality of actions related to prompt engineering, wherein in a first round of iteration, an action is selected based on the question, and in any round of iteration other than the first round of iteration, an action is selected based on the question and content obtained by performing a selected action; and
when a quantity of iterations reaches a threshold or an action selected in the current round of iteration is a termination action, inputting a prompt into a large language model, to obtain an answer related to the question, wherein the prompt comprises the question and content obtained by performing an action selected in each round of iteration.

2. The method according to claim 1, wherein that the action is selected based on the question and the content obtained by performing the selected action comprises:
determining, based on the question and the content obtained by performing the selected action, a probability that an action comprised in the plurality of actions related to prompt engineering is selected; and
using an action related to a highest probability as the selected action.

3. The method according to claim 1 or 2, wherein the method further comprises:
presenting the prompt to the user.

4. The method according to any one of claims 1 to 3, before iteratively selecting, based on the question, the action from the plurality of actions related to prompt engineering, the method further comprises:
determining that a question enhancement optimization control is enabled.

5. The method according to any one of claims 1 to 3, wherein the action related to prompt engineering comprises one or more of the following:
introducing external knowledge, applying a template, or decomposing a question.

6. A question processing apparatus, comprising:
an obtaining module, configured to obtain a question input by a user; and
a processing module, configured to iteratively select, based on the question, an action from a plurality of actions related to prompt engineering, wherein in a first round of iteration, an action is selected based on the question, and in any round of iteration other than the first round of iteration, an action is selected based on the question and content obtained by performing a selected action; and
the processing module is further configured to: when a quantity of iterations reaches a threshold or an action selected in the current round of iteration is a termination action, input a prompt into a large language model, to obtain an answer related to the question, wherein the prompt comprises the question and content obtained by performing an action selected in each round of iteration.

7. The apparatus according to claim 6, wherein when the processing module selects the action based on the question and the content obtained by performing the selected action, the processing module is specifically configured to:
determine, based on the question and the content obtained by performing the selected action, a probability that an action comprised in the plurality of actions related to prompt engineering is selected; and
use an action related to a highest probability as the selected action.

8. The apparatus according to claim 6 or 7, wherein the processing module is further configured to:
present the prompt to the user.

9. The apparatus according to any one of claims 6 to 8, before the processing module iteratively selects, based on the question, the action from the plurality of actions related to prompt engineering, the processing module is further configured to:
determine that a question enhancement optimization control is enabled.

10. The apparatus according to any one of claims 6 to 9, wherein the action related to prompt engineering comprises one or more of the following:
introducing external knowledge, applying a template, or decomposing a question.

11. A computing device cluster, comprising at least one computing device, wherein each computing device comprises a processor and a memory; and
the processor of the at least one computing device is configured to execute instructions stored in the memory in the at least one computing device, so that the computing device cluster performs the method according to any one of claims 1 to 5.

12. A computer-readable storage medium, wherein the computer-readable storage medium stores a computer program, and when the computer program is run on an electronic device, the electronic device is enabled to perform the method according to any one of claims 1 to 5.

13. A computer program product, wherein when the computer program product runs on an electronic device, the electronic device is enabled to perform the method according to any one of claims 1 to 5.
